# EUROPÄISCHE PATENTSCHRIFT

(11) **EP 2 976 160 B1**
(45) Veröffentlichungstag und Bekanntmachung des Hinweises auf die Patenterteilung: **14.06.2017**
(21) Anmeldenummer: 14711964.8
(22) Anmeldetag: 20.03.2014
(51) Int. Cl.: B05B 13/04, B25J 11/00, B25J 15/04, B05B 15/06, B05B 12/14

(54) **SPRITZSYSTEM, BESCHICHTUNGSANLAGE SOWIE VERFAHREN ZUM BESCHICHTEN**
SPRAYING SYSTEM, COATING MACHINE AND METHOD FOR COATING
SYSTÈME DE PULVÉRISATION, INSTALLATION DE REVÊTEMENT ET PROCÉDÉ DE REVÊTEMENT

(30) Priorität: 22.03.2013 DE 102013205171
(43) Veröffentlichungstag der Anmeldung: 27.01.2016
(73) Patentinhaber: Krautzberger GmbH, 65343 Eltville am Rhein (DE)
(72) Erfinder: WEIDMANN, Thomas, 56355 Bettendorf (DE)
(74) Vertreter: Mehler Achler
(86) Internationale Anmeldenummer: PCT/EP2014/055620
(87) Internationale Veröffentlichungsnummer: WO 2014/147184

(56) Entgegenhaltungen:
- DE-A1-102006 019 363
- DE-T2- 60 009 308
- GB-A- 2 215 240
- JP-A- S5 356 237

## Beschreibung

Die Erfindung betrifft ein Spritzsystem, eine Beschichtungsanlage und ein Verfahren zum Beschichten eines Gegenstandes.

Spritzvorrichtungen, wie z.B. Spritzpistolen, werden zum Auftragen von Beschichtungen auf Werkstücke, insbesondere in der Serien- und Massenfertigung eingesetzt, wobei die Spritzvorrichtungen auf automatisierte Arbeitsabläufe programmiert werden können. Dabei können im Rahmen eines Arbeitsablaufs, d.h. bei der Bearbeitung eines Werkstücks sowohl räumliche Einstellungen als auch Abänderungen in der Art und Weise der Materialabgabe (Mengenänderung, Änderung des Spritzkegels) vorgegeben werden.

Bekannte automatische Materialspritzvorrichtungen besitzen ein bewegliches Bauteil, in der Regel in Gestalt eines Roboterarms. An dem Roboterarm wird eine Spritzvorrichtung mittels eines Adapters angeordnet. Üblich sind beispielsweise Adapter mit Versorgungsleitungen oder im Adapter integrierten Versorgungskanälen, die die Spritzvorrichtung mit den benötigten Fluiden versorgen. Diese Adapter können als so genannte Schnellwechseladapter ausgebildet sein, die einen schnellen Austausch von Spritzvorrichtungen ermöglichen.

Solche Spritzvorrichtungen mit Schnellwechseladapter sind beispielsweise aus der DE 10 2006 019 363 B4 bekannt.

Zum Verbinden des Schnellwechseladapters mit der Spritzvorrichtung ist gemäß der DE 10 2006 019 363 B4 ein von Hand zu betätigender drehbarer Exzenterhebel vorgesehen. Beim Wechsel der Spritzpistole bzw. der Spritzvorrichtung muss der Roboter angehalten werden, um den Umbau durchführen zu können.

Aus der DE 39 27 880 A1 ist ein Verfahren und eine Beschichtungsanlage von Gegenständen mit häufig wechselndem Farbmaterial bekannt. Bei der serienweisen Farbbeschichtung von Gegenständen können häufige Farbwechsel erforderlich sein. Es gibt Fälle, bei denen fast jeder Gegenstand mit einer anderen Farbe beschichtet werden soll als der jeweils vorhergehende, wobei die Auswahlmöglichkeiten zwischen einer Vielzahl verschiedener Farbmaterialien besteht.

Durch die erforderlichen Farbwechsel ergeben sich verschiedene Probleme im Zusammenhang mit dem Farbversorgungsaufwand und vor allem mit der Reinigung der die Sprühvorrichtung mit dem Farbvorratssystem verbindenden Leitungen. Da vor jedem Farbwechsel die betreffenden Leitungen vollständig gereinigt, d.h. entleert, gespült und getrocknet werden müssen, waren bei den bekannten Anlagen erhebliche Farbverluste und insbesondere auch die mit der Entsorgung verbundene Umweltbelastung in Kauf zu nehmen. Um diese Probleme zu lösen, sind in der DE 39 27 880 A1 mehrere Beschichtungsstationen vorgesehen, wobei in jeder Beschichtungsstation jeweils zwei Spritzvorrichtungen in Form von Spritzpistolen vorgesehen sind, um - z.B. im Fall von LKW-Karosserien - die linke und die rechte Seite zu besprühen.

Jede Beschichtungsstation besitzt eine Mehrzahl von Anschlüssen, die über Stichleitungen mit Materialbehältern mit unterschiedlichen Farben verbunden sind. Um eine unterbrechungsfreie Beschichtung des Gegenstandes mit mehreren Farben zu gewährleisten, müssen die Spritzpistolen in einer vorgegebenen Reihenfolge in den Beschichtungsstationen mit den betreffenden Stichleitungen verbunden werden. Eine solche Anlage ist kompliziert aufgebaut und dementsprechend kostspielig. Außerdem müssen die Stichleitungen beim Farbwechsel gereinigt und die Spritzvorrichtung umgesteckt werden, wozu Schnellwechselkupplungen notwendig sind.

Aus der DE 20 2004 021 742 U1 ist ein Farbauftragssystem bekannt, bei dem in einer Farbauftragskabine mehrere Roboter mit jeweils einer Spritzvorrichtung zum Einsatz kommen. Der Einsatz mehrerer Roboter ist aufwendig und teuer.

Die DE 10 2004 036 230 A1 offenbart eine Beschichtungsvorrichtung mittels einer Beschichtungspistole, die mittels eines Roboters wahlweise mit Beschichtungskartuschen bestückt werden kann, die in einem Vorratsbehälter vorgehalten werden. Die Verwendung ein und derselben Spritzvorrichtung bei wechselnden Beschichtungsmaterialien erfordert die Reinigung der Spritzvorrichtung vor dem Materialwechsel.

Die DE 38 82 473 T2 beschreibt eine Beschichtungsvorrichtung mit einem Roboter, an dessen Arm eine Spritzvorrichtung befestigt ist. Der Roboter ist über ein Ventilgehäuse an mehrere Farbreservoirs angeschlossen. Während eines Beschichtungszyklus liefert die programmierbare Steuereinrichtung Zeitsteuersignale zu dem Ventilgehäuse, um die Anstrichmittel von einem gewünschten Reservoir zuzuleiten. Auch bei dieser Vorrichtung besteht das Problem, dass nur eine Spritzvorrichtung für wechselnde Materialien eingesetzt wird.

Aus der DE 600 09 308 T2 sind sowohl eine Vorrichtung als auch ein Verfahren zum Beschichten von Gegenständen bekannt, wobei an einem Roboterarm lösbar eine Spritzvorrichtung angeordnet ist, die mittels des Roboterarms an das jeweilige zu beschichtende Bauteil bewegbar ist. In der Spritzvorrichtung ist ein Behälter integriert, der mit dem Beschichtungsmaterial befüllbar ist, so dass je nach Anwendungsgebiet nur kleine Mengen des Beschichtungsmaterials auftragbar sind. Nachteilig dieser Vorrichtung ist jedoch, dass die Spritzvorrichtung nur so lange betreibbar ist, wie sich Beschichtungsmaterial in dem Behälter befindet. Sobald dieses jedoch aufgebraucht ist muss die Spritzvorrichtung wieder befüllt werden, was zeitaufwendig und arbeitsintensiv ist. Ein weiterer Nachteil dieser Erfindung ist, dass zum Befüllen der Spritzvorrichtung diese stets von dem Roboterarm getrennt werden muss, was ebenfalls einen deutlich erhöhten Zeitaufwand zur Folge hat.

Aus der bereits erwähnten DE 600 09 308 T2 und der DE 601 25 369 T2 ist jeweils eine Wechselstation bekannt, die zur Befüllung, Reinigung und zum Wechsel der aus der DE 600 09 308 T2 bekannten Spritzvorrichtung ausgelegt ist. Für die Befüllung der Spritzvorrichtung ist diese Wechselstation mittels Versorgungsleitungen an einem Versorgungssystem angeschlossen.

Aufgabe der Erfindung ist es somit, ein Spritzsystem für robotergestützte Spritzanlagen zur Verfügung zu stellen, das auf einfache und zeitsparende Weise die Durchführung verschiedener zeitlich aufeinanderfolgender Arbeitsgänge beim Beschichten von Gegenständen ermöglicht. Es ist auch Aufgabe, geeignete Komponenten für ein solches Spritzsystem, eine Beschichtungsanlage und ein Verfahren zum Beschichten zur Verfügung zu stellen.

Diese Aufgabe wird mit den Merkmalen des Anspruchs 1 gelöst.

Das Spritzsystem weist mindestens zwei Spritzvorrichtungen zum Auftragen von Spritzmaterialien auf zu beschichtende Gegenstände, wie z.B. Werkstücke, auf.

Das Spritzsystem weist weiterhin den Spritzvorrichtungen zugeordnete Schnellwechseladapter auf, wobei jeder Schnellwechseladapter eine erste Montagefläche zur lösbaren, mittelbaren oder unmittelbaren Anordnung an einem Roboterarm und eine zweite Montagefläche zur mittelbaren oder unmittelbaren Anordnung einer Spritzvorrichtung aufweist, wobei der Schnellwechseladapter erste Mittel und die Spritzvorrichtung zweite Mittel zur automatischen lösbaren Befestigung der Spritzvorrichtung am Schnellwechseladapter aufweisen.

Weiterhin weist das Spritzsystem eine Speicher- und Wechselvorrichtung auf, die mindestens zwei Spritzvorrichtungen aufnimmt.

Der Vorteil des Spritzsystems besteht darin, dass für jeden Arbeitsgang eine eigene Spritzvorrichtung zur Verfügung steht, die automatisch an den Roboterarm angekoppelt werden kann. Jede Spritzvorrichtung ist vorzugsweise für einen Arbeitsgang ausgelegt. Für einen anderen Arbeitsgang wird eine andere Spritzvorrichtung verwendet. Die zeitlich aufeinanderfolgenden Arbeitsgänge können somit ohne nennenswerte Stillstandzeiten, die bisher für die Umrüstung der Spritzvorrichtungen auf den jeweils nachfolgenden Arbeitsgang notwendig waren, durchgeführt werden. Der Mehraufwand für die Bereitstellung mehrerer Spritzvorrichtungen in einer Speicher- und Wechselvorrichtung, aus der sich der Roboter bedient, wird durch die Zeitersparnis mehr als aufgewogen.

Unter der Auslegung der Spritzvorrichtung für den jeweiligen Arbeitsgang werden beispielsweise die Versorgung der Spritzvorrichtung mit dem jeweils benötigten Spritzmaterial, die Einstellung der Geometrie des Materialstrahls und die Ausstattung der Spritzvorrichtung z.B. mit einer Spritzverlängerungseinrichtung zum Eindringen in zu beschichtende Hohlräume des betreffenden Gegenstandes verstanden.

Es ist damit möglich, ohne zeitliche Verzögerung Gegenstände mit unterschiedlichen Materialien, z.B. mit unterschiedlichen Farben oder Lacken zu beschichten, die übereinander und/oder nebeneinander auf der Oberfläche des Gegenstandes aufgebracht werden, und/oder gleiche Materialien durch unterschiedliche Strahlgeometrien und/oder Verlängerungen mit unterschiedlichen Strahlgeometrien an äußeren und/oder innenliegenden Werkstückoberflächen aufzubringen. Eine Reinigung der Spritzvorrichtung bei Materialwechsel ist nicht erforderlich. Außerdem wird dadurch auch Spritzmaterial eingespart, das ansonsten beim Reinigungsprozess verloren geht.

Umrüstzeiten, z.B. bei einem Wechsel von Außenbeschichtung zur Hohlraumbeschichtung entfallen, da Spritzvorrichtungen mit und ohne Verlängerungseinrichtung zwischen Spritzkopf und Spritzgehäuse bereitgehalten werden können.

Eine Einstellung bei einer Änderung der Strahlgeometrie, z.B. von Rundstrahl auf Flachstrahl und umgekehrt, und ein damit verbundener Spülvorgang bei einem erforderlichen Materialwechsel entfällt, weil in der Speicher- und Wechselvorrichtung Spritzvorrichtungen vorgehalten werden können, bei denen die gewünschte Strahlgeometrie mit dem gewünschten Spritzmaterial vorgesehen ist.

Da alle Maßnahmen, wie insbesondere Strahlgeometrie, Spritzmaterial oder Ausstattung, bei den Spritzvorrichtungen miteinander kombiniert werden können, wird die größtmögliche Flexibilität erreicht.

Ein weiterer Vorteil besteht darin, dass zur Durchführung der verschiedenen Arbeitsgänge nicht mehrere Roboter notwendig sind, sondern nur ein Roboter erforderlich ist, der aufgrund der automatischen Ankopplung der jeweils betreffenden Spritzvorrichtung ohne nennenswerte Zeitverluste von einem Arbeitsgang auf den nächsten Arbeitsgang umgerüstet werden kann. Die Investitionskosten für eine Beschichtungsstation können dadurch gesenkt werden. Auch ist das Spritzsystem vorteilhafterweise dort einsetzbar, wo aus Platzgründen nur ein Roboter eingesetzt werden kann. Der Platzbedarf der Speicher- und Wechselvorrichtung ist deutlich geringer als der Platzbedarf eines zusätzlichen Roboters.

In der Regel wird der Schnellwechseladapter unmittelbar am Roboterarm befestigt. Eine mittelbare Anordnung ist auch möglich, beispielsweise über Distanzelemente.

Distanzelemente können auch zwischen dem Schnellwechseladapter und der Spritzvorrichtung angeordnet werden, so dass auch an dieser Schnittstelle eine mittelbare Anordnung vorgesehen sein kann. Solche Distanzelemente können z.B. dann hilfreich sein, wenn die Anfahrposition der Spritzvorrichtungen in der Speicher- und Wechselvorrichtung geändert wird und eine Umprogrammierung des Roboters nicht vorgenommen werden soll.

Die automatische lösbare Befestigung hat den Vorteil, dass kein manueller Eingriff und somit kein Bedienungspersonal notwendig ist, um die Spritzvorrichtung am Schnellwechseladapter zu befestigen bzw. zu lösen. Die ersten und zweiten Mittel sind derart aufeinander abgestimmt, dass eine solche automatische lösbare Befestigung durchführbar ist.

Vorzugsweise ist jeder Spritzvorrichtung ein eigener Materialbehälter zugeordnet. Es wird dadurch möglich, in verschiedenen Arbeitsgängen unterschiedliche Spritzmaterialien auf dem zu beschichtenden Gegenstand aufzutragen.

Bei kleinen Farbmengen ist es von Vorteil, wenn der Materialbehälter an der Spritzvorrichtung unmittelbar angeordnet ist. Es handelt sich hierbei vorzugsweise um einen Behälter mit einem Füllvolumen bis zu 2 I.

Gemäß einer weiteren Ausführungsform ist der Materialbehälter Bestandteil einer Materialversorgungseinrichtung, die über mindestens eine Leitung mit der Spritzvorrichtung verbunden ist. Diese Alternative ist von Vorteil, wenn große Mengen an Spritzmaterial für den jeweiligen Arbeitsgang benötigt werden. Der Materialbehälter mit einer Förderpumpe kann an beliebiger Stelle einer Beschichtungsstation angeordnet werden.

Vorzugsweise ist ein Leitungssystem mit Leitungen für die Zuführung von Spritzmaterial und/oder von Druckluft vorgesehen. Die Leitungen sind vorzugsweise unmittelbar an die jeweilige Spritzvorrichtung angeschlossen.

Ein solches Leitungssystem umfasst vorzugsweise mehrere Leitungen, wobei eine Materialversorgungseinrichtung oder mehrere Materialversorgungseinrichtungen mit mehreren Spritzvorrichtungen über Leitungen verbunden sind.

Vorzugsweise weist das Leitungssystem für jede einzelne Spritzvorrichtung eine Materialzirkulationsleitung auf. Bei einer Materialzirkulationsleitung wird das Spritzmaterial der Spritzvorrichtung zugeführt und nicht benötigtes Spritzmaterial wird zu der Materialversorgungseinrichtung und somit zu dem Materialbehälter zurückgeführt. Dies hat den Vorteil, dass das Spritzmaterial ständig im Kreis geführt wird und insbesondere auch in den Pausen zwischen den Arbeitsgängen in der Zirkulationsleitung in Bewegung gehalten werden kann.

Vorzugsweise sind die Leitungen des Leitungssystems flexibel ausgebildet. Die Flexibilität der Leitungen, die insbesondere aus Schläuchen bestehen, hat den Vorteil, dass die Leitung bei einer Bewegung des Roboterarms und somit der Spritzvorrichtung problemlos mitgeführt werden kann.

Vorzugsweise weist das Leitungssystem eine Nachführeinrichtung auf. Die Nachführeinrichtung ist vorzugsweise zwischen der Materialversorgungseinrichtung und der Spritzvorrichtung angeordnet und kann z.B. auch einen Leitungsspeicher umfassen.

Vorzugsweise umfassen die ersten Mittel des Schnellwechseladapters zur automatischen, lösbaren Befestigung eine pneumatisch, hydraulisch oder elektrisch betätigbare Verriegelungseinrichtung. Der Schnellwechseladapter ist hierzu an entsprechende pneumatische, hydraulische oder elektrische Zuleitungen mit entsprechenden Versorgungs- und Steuereinrichtungen angeschlossen, so dass bei einem Wechsel der Spritzvorrichtungen die Verriegelungseinrichtung entsprechend angesteuert werden kann. Die betreffenden Steuereinrichtungen sind vorzugsweise in die Robotersteuerung oder -programmierung einbezogen. Es wird dadurch möglich, eine vollständig automatisch arbeitende Beschichtungsanlage, die aus dem Roboter und dem Spritzsystem besteht, zu schaffen.

Vorzugsweise weist die Verriegelungseinrichtung ein Verriegelungselement auf. Das Verriegelungselement wird hierbei von einer Freigabe- in eine Verriegelungsposition und umgekehrt bewegt.

Die zweiten Mittel der Spritzvorrichtung zur automatischen lösbaren Befestigung umfassen vorzugsweise ein Befestigungselement. Die ersten und zweiten Mittel sind vorzugsweise derart aufeinander abgestimmt, dass Verriegelungselement und Befestigungselement zusammenwirken können, wobei das Verriegelungselement und das Befestigungselement vorzugsweise eine formschlüssige und/oder kraftschlüssige Verbindung bilden, wenn sich das Verriegelungselement in der Verriegelungsposition befindet.

Die Spritzvorrichtung weist in einer vorteilhaften Ausführungsform eine Auflagefläche zur Montage an einem Schnellwechseladapter, ein Gehäuse und einen Spritzkopf, wobei die Auflagefläche an dem Gehäuse vorgesehen ist, und mindestens ein gegenüber der Auflagefläche vorstehendes Befestigungselement mit einer Längsachse L_{B} auf. Die Spritzvorrichtung ist zudem dadurch gekennzeichnet, dass zweite Mittel zur automatischen, lösbaren Befestigung an einem Schnellwechseladapter vorgesehen sind, wobei diese Mittel das Befestigungselement umfassen und wobei das Befestigungselement mindestens ein Spann- und Verriegelungsmittel aufweist, das derart ausgebildet ist, dass im montierten Zustand der Spritzvorrichtung mindestens ein, vorzugsweise senkrecht zur Längsachse L_{B} des Befestigungselementes, verschiebbares Verriegelungselement des Schnellwechseladapters eine von der Auflagefläche weg gerichtete Kraft in Richtung der Längsachse L_{B} des Befestigungselements auf das Befestigungselement ausübt. Das Befestigungselement ist derart ausgebildet, dass im Zusammenwirken mit dem Verriegelungselement des Schnellwechseladapters eine automatische Verriegelung stattfindet, wobei gleichzeitig die Spritzvorrichtung gegen den Schnellwechseladapter gezogen und gespannt wird. Der Vorteil besteht darin, dass keine manuelle Betätigung der Verriegelungseinrichtung erforderlich ist.

Vorzugsweise ist das Befestigungselement ein stiftförmiges Element.

Die Spann- und Verriegelungsmittel des Befestigungselementes umfassen mindestens eine an der Außenseite des Befestigungselementes vorgesehene Aussparung. Gemäß einer weiteren Ausführungsform können zwei Aussparungen an gegenüberliegenden Seiten des Befestigungselementes angeordnet sein. Weitere Ausgestaltungen des Spann- und Verriegelungsmittels sehen eine Bohrung oder einen Vorsprung vor.

Das Spann- und Verriegelungsmittel umfasst weiterhin vorzugsweise mindestens eine zweite Spannfläche. Diese zweite Spannfläche wirkt mit dem Verriegelungselement zusammen und bewirkt das Spannen der Spritzvorrichtung gegen den Schnellwechseladapter. Die zweite Spannfläche kann eine gekrümmte oder eine ebene Fläche sein.

Diese zweite Spannfläche kann beispielsweise eine schräg angeordnete Fläche sein, die mit der Längsachse L_{B} einen Winkel α >90° einnimmt, so dass beim Überlaufen dieser Fläche mittels des Verriegelungselements die gewünschte Kraft auf das Befestigungselement ausgeübt wird. Dadurch wird eine kraftschlüssige Verbindung hergestellt.

Vorzugsweise weist das Verriegelungselement ebenfalls eine schräge - insbesondere zur Spannfläche des Befestigungselements komplementäre - erste Spannfläche auf.

Gemäß einer weiteren Ausführungsform ist zwischen dem Gehäuse und dem Spritzkopf eine Spritzverlängerungseinrichtung angeordnet. Diese Spritzverlängerungseinrichtung ermöglicht beispielsweise das Ausspritzen von Hohlräumen. Die Spritzverlängerungseinrichtung enthält alle notwendigen Leitungen zur Versorgung des Spritzkopfes.

Vorzugsweise sind/ist am Gehäuse der Spritzvorrichtung mindestens ein Materialbehälter und/oder mindestens ein Materialanschluss angeordnet.

Des Weiteren weist das Gehäuse vorzugsweise mindestens ein erstes Führungsmittel auf. Dieses Führungsmittel wirkt mit einem zweiten Führungsmittel der Speicher- und Wechselvorrichtung zusammen. Dieses Führungsmittel an der Spritzvorrichtung kann ein Vorsprung, ein Keil oder auch eine Schiene sein. Wesentlich für das erste Führungsmittel ist das Zusammenwirken mit dem zweiten Führungsmittel des Apparatefachs des Magazins der Speicher- und Wechselvorrichtung, so dass eine einfache Ablage der Spritzvorrichtung in einer vorgegebenen Endposition und eine einfache Entnahme aus dem Apparatefach möglich ist. Die ersten und die zweiten Führungsmittel können z.B. nach dem Nut- und Federprinzip ausgestaltet sein. Vorzugsweise weist der Spritzapparat zwei erste Führungsmittel vorzugsweise an gegenüberliegenden Gehäuseseiten auf. Dementsprechend verfügt auch das Apparatefach über zwei zweite Führungsmittel.

Der Schnellwechseladapter weist in einer vorteilhaften Ausführungsform einen Adaptergrundkörper und ein Verriegelungselement auf. Der Adaptergrundkörper weist dabei eine erste Montagefläche zur lösbaren Anordnung an einem Roboterarm und eine zweite Montagefläche zur lösbaren Anordnung einer Spritzvorrichtung auf, wobei im Adaptergrundkörper senkrecht zur zweiten Montagefläche mindestens eine erste Bohrung zur Aufnahme mindestens eines an der Spritzvorrichtung angeordneten Befestigungselements vorgesehen ist. Das Verriegelungselement erstreckt sich mindestens teilweise in die erste Bohrung und ist parallel zur Montagefläche angeordnet. Der Schnellwechseladapter ist zudem dadurch gekennzeichnet, dass erste Mittel zur automatischen lösbaren Befestigung einer Spritzvorrichtung vorgesehen sind, die eine pneumatisch, hydraulisch oder elektrisch betätigbare Verriegelungseinrichtung umfassen, welche das Verriegelungselement von einer Freigabeposition in eine Verriegelungsposition und umgekehrt bewegt. Erfindungsgemäß ist das Verriegelungselement in Richtung seiner Längsachse verschiebbar angeordnet. Die axiale Verschiebung des Verriegelungselementes zum Verriegeln und zum Erreichen der Freigabeposition vereinfacht die Ausgestaltung der Verriegelungseinrichtung.

Vorzugsweise weist das Verriegelungselement mindestens eine erste Spannfläche auf. Die erste Spannfläche kann eine gekrümmte oder eine ebene Fläche sein.

Die erste Spannfläche kann beispielsweise eine schräge Fläche sein, die mit der Längsachse L_{R} des Verriegelungselements einen Winkel β >90° einnimmt, so dass beim Überlaufen dieser Fläche mittels des Befestigungselements die gewünschte Kraft auf das Befestigungselement ausgeübt wird.

Im Zusammenwirken des Verriegelungselements mit dem Befestigungselement der Spritzvorrichtung, insbesondere mit dem Spann- und Verriegelungsmittel, ist nicht nur eine Verriegelung, sondern auch ein Beiziehen und somit ein Verspannen der Spritzvorrichtung gegenüber dem Schnellwechseladapter durchführbar.

Die Speicher- und Wechselvorrichtung der Spritzvorrichtung weist vorteilhafterweise mindestens ein Magazin mit mindestens zwei Apparatefächern auf, wobei jedes Apparatefach eine Aufnahmeeinrichtung für eine Spritzvorrichtung aufweist.

Die Apparatefächer können nebeneinander und/oder übereinander angeordnet sein. Hierbei ist die Nebeneinanderanordnung der Apparatefächer bevorzugt, weil dies z.B. die Handhabung der Leitungen des Leitungssystems vereinfacht und auch Apparate untergebracht werden, die beispielsweise eine Verlängerungseinrichtung aufweisen.

Die Speicher- und Wechselvorrichtung ist vorzugsweise nicht an das Leitungssystem angeschlossen, weil die einzelnen Spritzapparate an das Leitungssystem angeschlossen sind.

Vorzugsweise besitzt die Speicher- und Wechselvorrichtung einen Grundkörper, an dem das Magazin angeordnet ist. Dieser Grundkörper kann z.B. ein Gestell oder ein Rahmen sein. Das Gestell kann als mobile Einheit innerhalb einer Beschichtungsstation an einem geeigneten Ort abgestellt werden. Der Grundkörper kann auch an einer Wand der Beschichtungsstation befestigt werden.

Das Magazin und/oder die Apparatefächer sind vorzugsweise um eine horizontale und/oder vertikale Achse schwenkbar am Grundkörper angeordnet. Aufgrund der unterschiedlichen Ausstattung der Spritzvorrichtungen kann es von Vorteil sein, wenn das Magazin und/oder die Apparatefächer in der beschriebenen Weise schwenkbar angeordnet sind, um das Aufnehmen der Spritzvorrichtungen durch den Roboterarm zu erleichtern. Die Programmierung des Roboters kann dadurch gegebenenfalls vereinfacht werden.

Zu einer vereinfachten Entnahme und Ablage der Spritzvorrichtungen in der Speicher- und Wechselvorrichtung trägt auch bei, wenn das Magazin und/oder die Apparatefächer vorzugsweise in vertikaler Richtung und/oder in horizontaler Richtung verstellbar am Grundkörper angeordnet sind. Um dies zu realisieren, ist es von Vorteil, eine Verfahreinrichtung an dem Grundkörper anzubringen, an dem wiederum das Magazin angeordnet ist. Als Verfahreinrichtung ist vorzugsweise eine Linearverschiebeeinrichtung vorgesehen.

Die Aufnahmeeinrichtung jedes Apparatefachs umfasst vorzugsweise mindestens ein zweites Führungsmittel für die Spritzvorrichtung. Das zweite Führungsmittel wirkt mit dem ersten Führungsmittel an der Spritzvorrichtung zusammen und ist für eine einfache und sichere Ablage der Spritzvorrichtung vorgesehen. Dieses zweite Führungsmittel kann ein Vorsprung, ein keilförmiger Vorsprung oder auch eine Schiene sein.

Das Apparatefach kann je nach Ausgestaltung der zweiten Führungsmittel nur aus den zweiten Führungsmitteln bestehen.

Die ersten und zweiten Führungsmittel bilden vorzugweise eine formschlüssige Verbindung.

Die Aufgabe wird auch mit einer Beschichtungsanlage gelöst, die einen Roboter und ein Spritzsystem umfasst.

Die Aufgabe wird auch mit einem Verfahren zum Beschichten eines Gegenstandes mit Spritzmaterialien unter Verwendung eines Spritzsystems gelöst, wobei mindestens zwei Arbeitsgänge zeitlich nacheinander durchgeführt werden und jeder Arbeitsgang folgende aufeinanderfolgende Verfahrensschritte aufweist:
a. ein Roboter mit einem Roboterarm, der mit einem Schnellwechseladapter bestückt ist, fährt entsprechend seines vorprogrammierten Ablaufs eine in einer Speicher- und Wechselvorrichtung vorgehaltene Spritzvorrichtung an, die für den betreffenden Arbeitsgang ausgelegt ist,
b. ein Verbindungselement der Spritzvorrichtung wird mit einem Verriegelungselement des Schnellwechseladapters automatisch in Eingriff gebracht, wodurch die Spritzvorrichtung am Schnellwechseladapter befestigt wird,
c. der Roboter fährt die Spritzvorrichtung zum zu beschichtenden Gegenstand,
d. der Gegenstand wird beschichtet,
e. die Spritzvorrichtung wird nach der Beschichtung wieder vom Schnellwechseladapter gelöst und in der Speicher- und Wechselvorrichtung abgelegt.

Beispielhafte Ausführungsformen der Erfindung werden nachfolgend anhand der Zeichnungen näher erläutert. Es zeigen:
- Figur 1: eine schematische Darstellung einer Beschichtungsanlage mit Roboter und Spritzsystem,
- Figur 2: eine perspektivische Darstellung einer Speicher- und Wechselvorrichtung, die mit Spritzvorrichtungen bestückt ist,
- Figur 3: eine perspektivische Darstellung einer weiteren Ausführungsform einer Speicher- und Wechselvorrichtung,
- Figur 4: eine Spritzvorrichtung und einen Schnellwechseladapter in perspektivischer Darstellung vor der Montage,
- Figur 5: eine Spritzvorrichtung und einen Schnellwechseladapter in perspektivischer Darstellung nach der Montage,
- Figur 6: eine Seitenansicht der in Figur 5 gezeigten Kombination aus Spritzvorrichtung und Schnellwechseladapter,
- Figur 7: einen Vertikalschnitt durch die in Figur 5 gezeigte Kombination aus Spritzvorrichtung und Schnellwechseladapter vor der Verriegelung,
- Figur 8: einen Vertikalschnitt entsprechend der Figur 7 nach der Verriegelung,
- Figur 9: eine Spritzvorrichtung mit einer Verlängerung und
- Figuren 10a-d: verschiedene Ausführungsformen eines Befestigungselementes mit dazugehörigem Verriegelungselement.

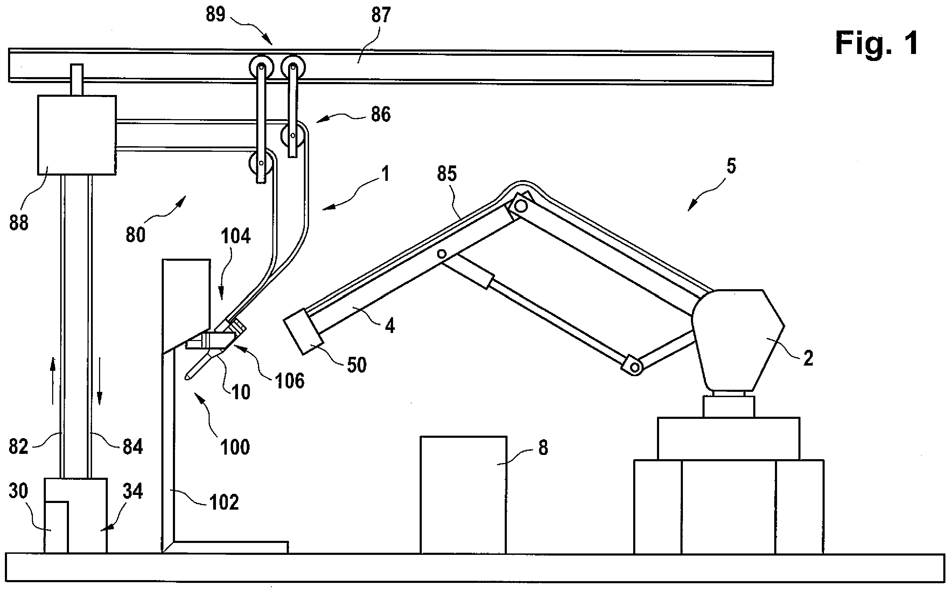

In der Figur 1 ist eine Beschichtungsanlage 5 schematisch dargestellt, die einen Roboter 2 mit Roboterarm 4 und ein Spritzsystem 1 aufweist. Die Beschichtungsanlage 5 dient zur Beschichtung eines Gegenstandes 8, der in mehreren Arbeitsgängen beschichtet wird, wozu entsprechend den Arbeitsgängen eine entsprechende Anzahl an Spritzvorrichtungen 10 eingesetzt wird.

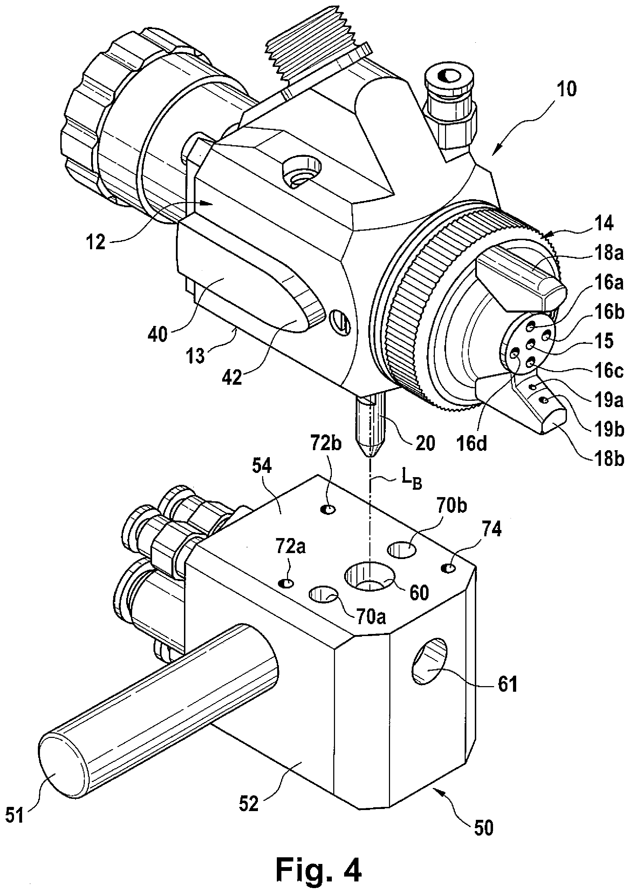

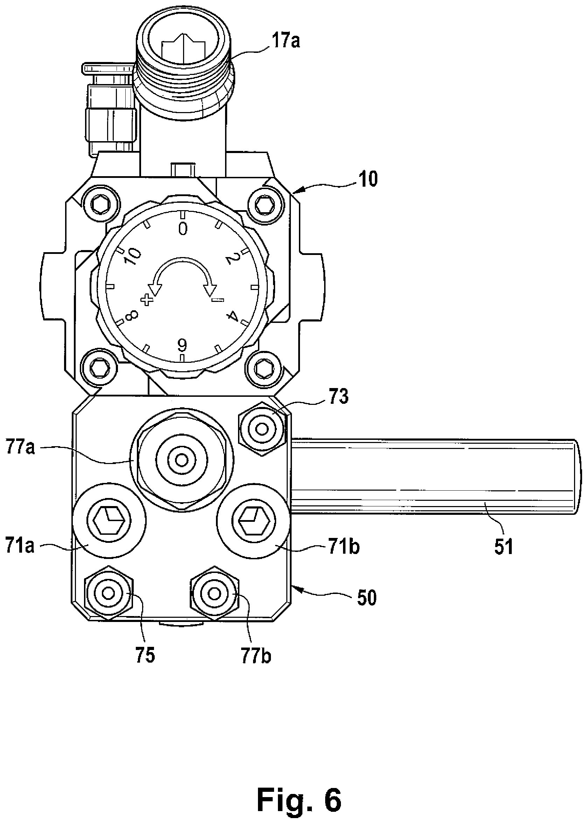

Am Ende des Roboterarms 4 ist ein Schnellwechseladapter 50 angeordnet, der an Druckluftleitungen angeschlossen ist, wovon eine Druckluftleitung 85 zeichnerisch dargestellt ist. Die Leitung 85 wird entlang des Roboterarms 4 geführt und ist dort befestigt und ist an eine nicht dargestellte Drucklufterzeugungseinrichtung sowie gegebenenfalls an eine (nicht dargestellte) Steuereinrichtung angeschlossen. Über diese Druckluftleitung 85 wird Druckluft dem Schnellwechseladapter 50 zugeführt, von wo aus diese Druckluft der montierten Spritzvorrichtung 10 zugeleitet wird, wie dies im Zusammenhang mit den Figuren 4 und 6 erläutert wird.

Das Spritzsystem 1 weist eine Speicher- und Wechselvorrichtung 100 auf, die einen Grundkörper 102 aufweist, der als Gestell ausgebildet ist. Der Grundkörper 102 kann an einer beliebigen Stelle auf dem Boden abgestellt werden und gegebenenfalls dort befestigt werden. An dem Grundkörper 102 befindet sich ein Magazin 104 mit Apparatefächern 106, in denen Spritzvorrichtungen 10 abgelegt sind.

In der Darstellung der Figur 1 ist aufgrund der Seitenansicht nur eine Spritzvorrichtung 10 zu sehen, der an ein Leitungssystem 80 angeschlossen ist. Bei dem Leitungssystem 80 handelt es sich um eine Zirkulationsleitung, die eine Materialvorlaufleitung 82 und eine Materialrücklaufleitung 84 umfasst. Mittels dieser Leitung 82 wird aus einer Materialversorgungseinrichtung 34, die einen Materialbehälter 30 aufweist, Spritzmaterial der Spritzvorrichtung 10 zugeführt.

Das Leitungssystem weist eine Nachführeinrichtung 86 auf, die einen Leitungsspeicher 88 und ein Rollensystem 89 umfasst, das an einer Schiene 87 geführt ist. Wenn die Spritzvorrichtung 10 mit dem Schnellwechseladapter 50 verbunden ist, wird die Spritzvorrichtung 10 zum Gegenstand 8 geführt und der Arbeitsgang dort durchgeführt. Über die Nachführeinrichtung 86 werden die Materialleitungen 82 und 84 entsprechend nachgeführt.

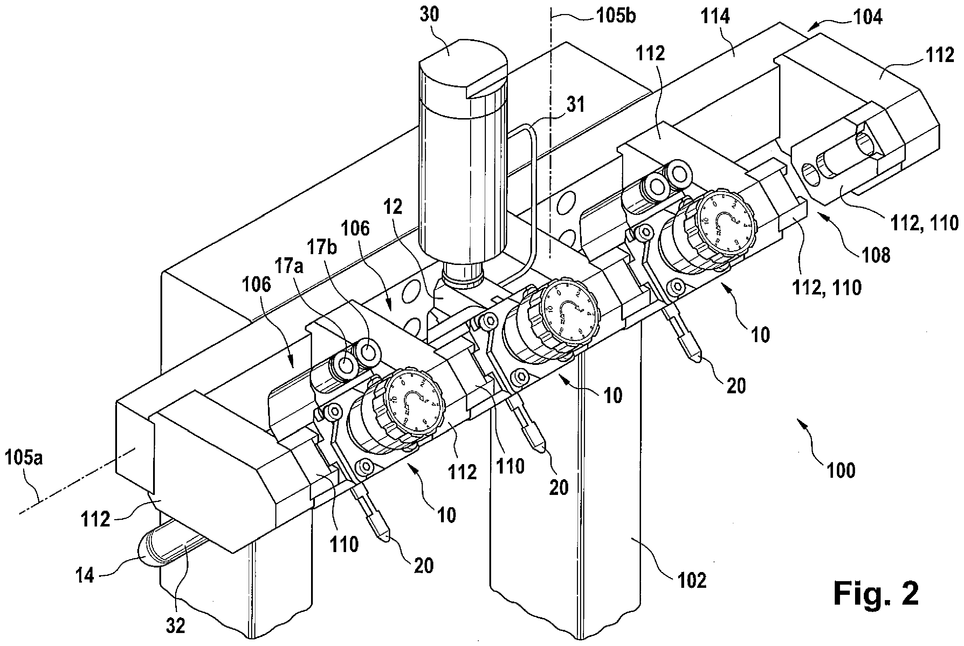

In der Figur 2 ist eine vergrößerte Darstellung einer Speicher- und Wechselvorrichtung 100 dargestellt. An dem Grundkörper 102 ist am oberen Ende ein Magazin 104 befestigt, das eine Rückwand 114 und mehrere beabstandet angeordnete Seitenwände 112 aufweist. Die Seitenwände 112 unterteilen das Magazin in nebeneinander angeordnete Apparatefächer 106, die sowohl nach oben als auch nach unten offen ausgebildet sind.

An den Seitenwänden 112 ist jeweils eine Aufnahmeeinrichtung 108 vorgesehen, die in der hier gezeigten Ausführungsform aus Führungsschienen 112 besteht, die die zweiten Führungsmittel 110 bilden. Diese Führungsschienen 112 sind schräg angeordnet und einseitig offen, so dass eine Spritzvorrichtung 10 eingesteckt werden kann und in einer vorgegebenen Endposition fixiert werden kann. Hierbei greifen die ersten Führungsmittel 40 der Spritzvorrichtung 10 (s. Figur 4) in die zweiten Führungsmittel 110 ein.

In dem Magazin der Figur 2 sind vier Apparatefächer 106 vorgesehen, wobei drei Apparatefächer 106 mit Spritzvorrichtungen 10 belegt sind. Zwei Spritzvorrichtungen 10 sind an ihrem Gehäuse 12 mit Materialanschlüssen 17a,b versehen, an denen die in Figur 1 gezeigten Leitungen 82 und 84 installiert werden können.

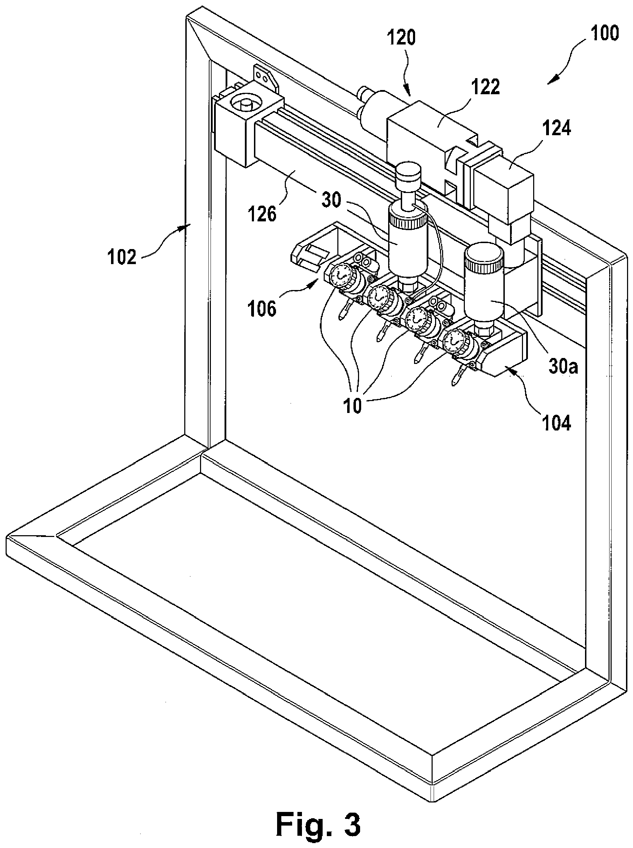

Eine Spritzvorrichtung 10 weist an seinem Gehäuse 12 einen Materialbehälter 30 auf, der mittels einer Druckluftzuleitung 31 mit Druckluft zum Austragen des Spritzmaterials beaufschlagt wird. Es handelt sich bei diesem Materialbehälter 30 um einen Druckbehälter. Es können auch gravitationsbetriebene Materialbehälter 30a eingesetzt werden, bei denen keine Druckluftzuleitung 31 erforderlich ist (s. Fig. 3).

Sämtliche Spritzvorrichtungen 10 weisen ein Befestigungselement 20 auf, mit dem die Spritzvorrichtungen 10 am Schnellwechseladapter 50 befestigt und verriegelt werden können.

Außerdem weist die vordere Spritzvorrichtung 10 noch eine Verlängerung 32 zwischen dem Gehäuse 12 und dem Spritzkopf 14 auf.

In der in Figur 2 gezeigten Darstellung ist das Magazin 104 am Gestell 102 befestigt. Es besteht auch die Möglichkeit, das Magazin 104 schwenkbar an dem Gestell 102 anzuordnen. Schematisch ist eine horizontale Schwenkachse 105a und eine vertikale Schwenkachse 105b dargestellt. Um die Schwenkmöglichkeit zu realisieren, sind entsprechende Zusatzeinrichtungen erforderlich, die hier nicht dargestellt sind. Es ist auch möglich, die einzelnen Apparatefächer 106 unabhängig voneinander um eine horizontale Schwenkachse 105a und/oder um eine vertikale Schwenkachse 105b zu schwenken, um die Position der Spritzvorrichtungen 10 zu verändern und gegebenenfalls an die programmierte Aufnahmeposition des Roboterarms 4 anzupassen.

In der Figur 3 ist eine Speicher- und Wechselvorrichtung 100 dargestellt, die über eine Verfahreinrichtung 120 verfügt, die am Grundkörper 102 befestigt ist. Es ist außerdem eine Schiene 126 am Grundkörper 102 vorgesehen, an der das Magazin 104 verschiebbar gelagert ist. Mittels der Verfahreinrichtung 120, die über eine Antriebseinrichtung 122 und beispielsweise ein Winkelgetriebe 124 verfügt, kann das Magazin 104 in horizontaler Richtung verschoben werden. Es ist damit möglich, die jeweils benötigte Spritzvorrichtung 10 an eine gemeinsame vorgegebene Position zu verschieben, wo der Roboterarm 4 die Spritzvorrichtungen 10 aufnimmt. Dies vereinfacht die Programmierung des Roboters 2, weil sämtliche Spritzvorrichtungen 10 an ein und derselben Stelle aufgenommen werden können.

Der hier gezeigte Materialbehälter 30a ist ein gravitationsbetriebener Behälter, der keine Druckluftzuführung benötigt. Der Behälter 30 ist ein mit Druckluft beaufschlagter Behälter.

In der Figur 4 ist eine Spritzvorrichtung 10 und ein Schnellwechseladapter 50 perspektivisch vor der Montage dargestellt. Die Spritzvorrichtung 10 weist ein Gehäuse 12 und einen Spritzkopf 14 auf, der eine Materialaustrittsdüse 15 sowie um die Materialaustrittsdüse 15 angeordnete erste Luftdüsen 16a,b,c,d aufweist, mit denen die Geometrie des Materialrundstrahls eingestellt werden kann. Außerdem ist der Spritzkopf 14 mit zwei Hörnern 18a und 18b ausgestattet. An den Hörnern 18a,b sind zweite Luftdüsen 19a,b angeordnet, die dazu dienen, aus einem Rundstrahl einen Flachstrahl zu erzeugen.

Je nach Art der Ansteuerung der Luftdüsen 16a-d und 19a,b kann die Geometrie des Materialstrahls verändert werden. Es sind auch Strahlgeometrien zwischen einem Rundstrahl und einem Flachstrahl möglich. Die gewünschte Strahlgeometrie wird für den betreffenden Arbeitsgang voreingestellt, so dass bei einem Wechsel der Spritzvorrichtung 10 keine Anpassung durchgeführt werden muss.

An der Seite des Gehäuses 12 ist ein erstes Führungsmittel 40 in Form eines Führungskeils dargestellt, der einen verjüngten Abschnitt 42 aufweist. Dieser Führungskeil greift in die zweiten Führungsmittel 110 des Apparatefachs 108 (s. Figur 2) ein. Der verjüngte Abschnitt 42 erleichtert die Einführung in das zweite Führungsmittel 110 des Apparatefachs 108. An der gegenüberliegenden Seitenwand des Gehäuses 12 ist ein weiteres zweites Führungsmittel angeordnet, was in der Figur 4 jedoch nicht zu sehen ist.

Das Gehäuse 12 weist an seiner Unterseite eine Auflagefläche 13 auf, an der ein senkrecht zu dieser Fläche 13 angeordnetes Befestigungselement 20 angeordnet ist, das eine Längsachse L_{B} aufweist. Das Befestigungselement 20 ist stiftartig ausgebildet und wird im Zusammenhang mit den nachfolgenden Figuren noch eingehender beschrieben.

Der Schnellwechseladapter 50 weist eine erste Montagefläche 52 auf, mit der der Schnellwechseladapter 50 am Roboterarm 4 befestigt ist. Zur Befestigung dient auch ein Haltebolzen 51, der nur schematisch und beispielhaft dargestellt ist.

Der Schnellwechseladapter 50 verfügt über eine zweite Montagefläche 54, in der eine erste Bohrung 60 angeordnet ist, in die das Befestigungselement 20 der Spritzvorrichtung 10 bei der Montage eingreift. In der Montagefläche 54 enden mehrere Kanäle. Es handelt sich hierbei um die Spritzluftkanäle 70a,b, die Steuerluftkanäle 72a,b sowie den Druckluftkanal 74. Diese Kanäle korrespondieren mit entsprechenden an der Auflagefläche 13 angeordneten Öffnungen der Spritzvorrichtung 10. Gegebenenfalls sind an den betreffenden Öffnungen noch Dichtungen vorgesehen, die nicht dargestellt sind. Die Druckluft aus dem Spritzluftkanal 70a,b wird den ersten Luftdüsen 16a-d zugeführt. Die Luft aus dem Steuerluftkanal 72a,b wird den zweiten Luftdüsen 19a,b der beiden Hörner 18a,b zugeführt. Die Druckluft des Kanals 74 wird der Druckluftleitung 31 des Materialbehälters 30 zugeführt.

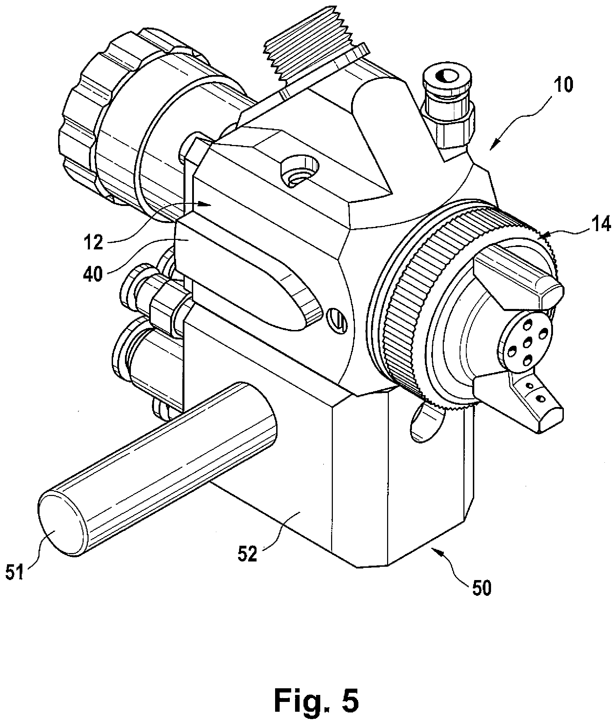

Wenn die Spritzvorrichtung 10 auf der zweiten Montagefläche 54 aufgesetzt ist, greift das Befestigungselement 20 in die erste Bohrung 60 ein. Diese montierte Darstellung ist in der Figur 5 dargestellt.

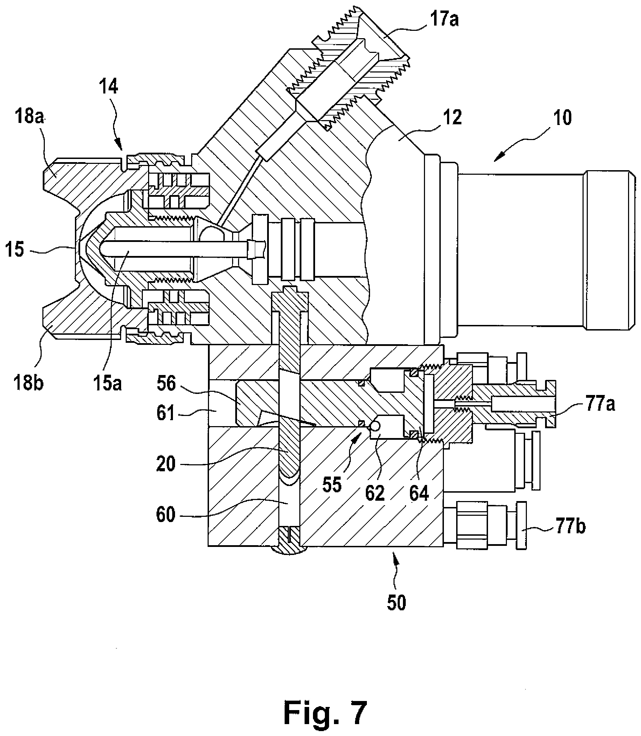

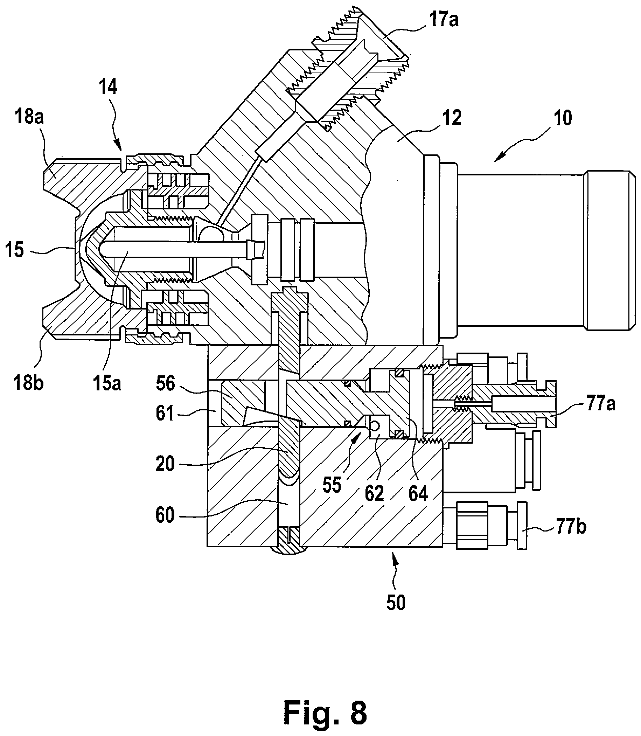

In der Figur 6 ist eine Seitenansicht der Kombination aus Spritzvorrichtung 10 und Schnellwechseladapter 50 zu sehen. An dem Schnellwechseladapter 50 befinden sich die Spritzluftanschlüsse 71a,b, der Steuerluftanschluss 73 und der Druckluftanschluss 75 sowie die Steuerluftanschlüsse 77a,b für die Verriegelungseinrichtung 55, die im Zusammenhang mit den Figuren 7 und 8 näher beschrieben wird.

In der Figur 7 ist ein Vertikalschnitt durch die Kombination aus Spritzvorrichtung 10 und Schnellwechseladapter 50 dargestellt. Im Gehäuse 12 befindet sich eine Materialnadel 15a, mit der die Materialaustrittsdüse 15 geöffnet oder geschlossen werden kann. Zum Betätigen der Materialnadel wird die Steuerluft eingesetzt. Die beiden Hörner 18a,b sind ebenfalls im Schnitt dargestellt. Weitere Einzelheiten im Innern des Gehäuses 12 sind nicht dargestellt, da diese für die Erfindung nicht wesentlich sind.

Im Gehäuse 12 ist ferner das Befestigungselement 20 angeordnet, das sich senkrecht nach unten erstreckt und in der ersten Bohrung 60 des Schnellwechseladapters 50 angeordnet ist. Das Befestigungselement 20 wirkt mit einem Verriegelungselement 56 der Verriegelungseinrichtung 55 zusammen, die in der hier gezeigten Darstellung pneumatisch arbeitet. Hierzu sind die Steuerluftanschlüsse 77a,b vorgesehen, über die Steuerluft zum Verriegeln und Steuerluft zum Freigeben der Verriegelungseinrichtung 55 vorgesehen ist.

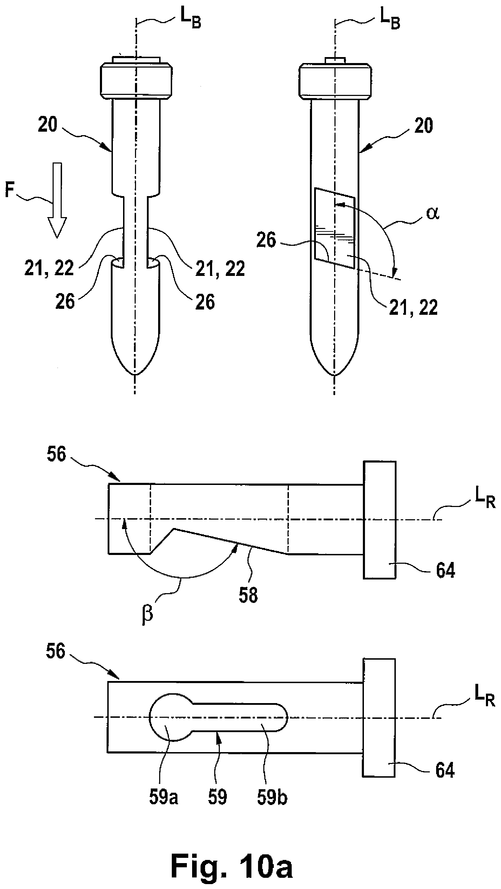

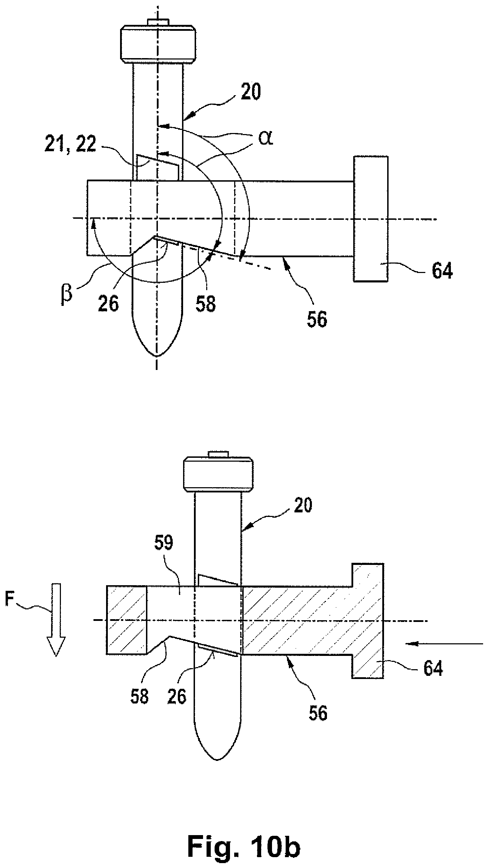

Das Verriegelungselement 56 befindet sich in einer zweiten Bohrung 61 und weist einen Kolben 64 auf, der sich in der Kolbenkammer 62 befindet. Zum Verschieben des Verriegelungselementes 56 senkrecht zu dem Befestigungselement 20 wird der Kolben entweder von der einen oder von der anderen Seite mit Druckluft beaufschlagt. Das Verriegelungselement 56 wirkt mit dem Befestigungselement 20 formschlüssig zusammen, wie die Figur 8 zeigt. Die Einzelheiten werden im Zusammenhang mit den Figuren 10a und 10b erläutert.

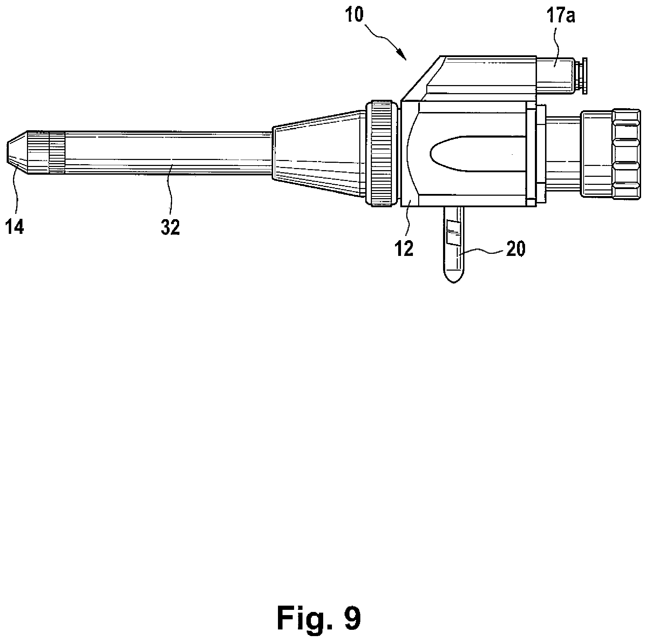

In der Figur 9 ist eine Spritzvorrichtung 10 in Seitenansicht dargestellt, die am Gehäuse 12 eine Verlängerungseinrichtung 32 aufweist, an dessen vorderen Ende der Spritzkopf 14 angeordnet ist. Eine Spritzvorrichtung 10 mit dieser Ausstattung ist insbesondere für die Beschichtung von Hohlräumen vorgesehen.

In der Figur 10a ist das Befestigungselement 20 in zwei Seitenansichten dargestellt. Das Befestigungselement 20 weist Spann- und Verriegelungsmittel 21 auf, die als gegenüberliegend angeordnete Aussparungen 22 ausgebildet sind. Weitere Bestandteile der Spann- und Verriegelungsmittel 21 sind die zweiten Spannflächen 26 am unteren Ende der Aussparungen 22. Die zweiten Spannflächen 26 sind ebene Flächen, die schräg angeordnet sind und mit der Längsachse L_{B} des Befestigungselements einen Winkel α >90° bilden.

In der Figur 10a ist auch das Verriegelungselement 56 in zwei Seitenansichten dargestellt. Das Verriegelungselement 56 weist ein Langloch 59 auf, das einen kreisrunden Lochabschnitt 59a und einen länglichen Lochabschnitt 59b aufweist. Der Durchmesser des kreisrunden Lochabschnitts 59a ist auf den Durchmesser des Befestigungselementes 20 abgestimmt, so dass dieses in den kreisrunden Lochabschnitt 59a eingeführt werden kann. Die Breite des länglichen Lochabschnitts 59b ist an die Dicke des Befestigungselements 20 im Bereich der Aussparungen 23 angepasst. Neben dem länglichen Lochabschnitt 59b weist das Verriegelungselement 56 erste Spannflächen 58 auf, die mit der Längsachse L_{R} des Verriegelungselementes 56 einen Winkel β >90° bildet. Die Winkel α und β sind vorzugsweise gleich groß.

Wie in der Figur 10b im oberen Teil dargestellt wird, wird zunächst das Befestigungselement 20 von oben in den kreisrunden Lochabschnitt 59a des Langlochs 59 eingeführt. Das Verriegelungselement 20 befindet sich in Freigabeposition. Anschließend wird das Verriegelungselement 56 in Pfeilrichtung verschoben, so dass die beiden Spannflächen 26 und 58 aneinander liegen und übereinander gleiten, so dass eine Kraft F auf das Befestigungselement 20 ausgeübt wird und dieses nach unten gezogen wird. Damit wird das Verspannen der Spritzvorrichtung 10 gegen den Schnellwechseladapter 50 bewirkt. Das Verriegelungselement 56 befindet sich in Verriegelungsposition.

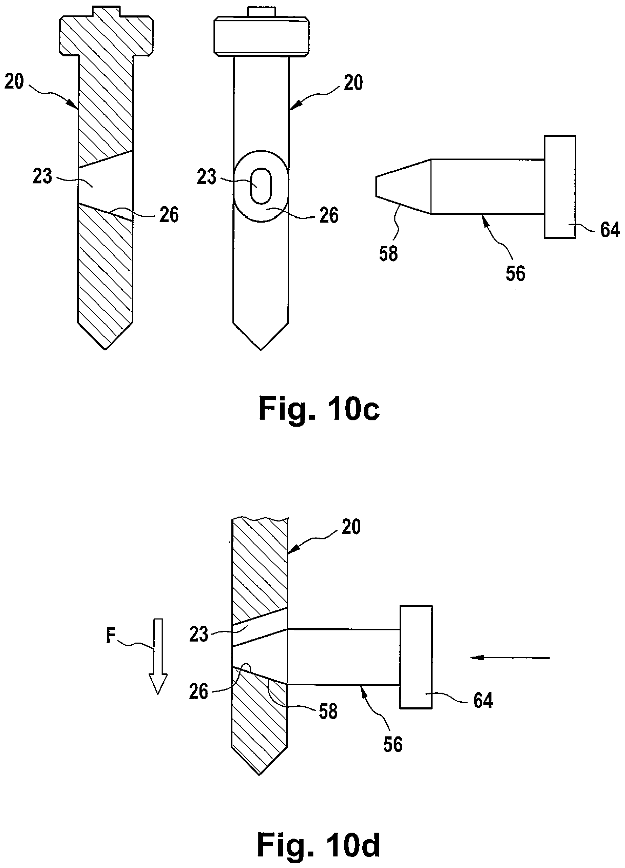

In der Figur 10c ist eine weitere Ausführungsform des Befestigungselementes 20 in zwei Seitenansichten dargestellt. Das Befestigungselement 20 weist eine Bohrung 23 auf, die konisch ausgeführt ist, so dass eine konische zweite Spannfläche 26 gebildet wird.

Das Verriegelungselement 56 ist als Dorn ausgebildet und weist eine kegelförmige Spitze auf, die eine erste Spannfläche 58 bildet.

In der Figur 10d ist eine Schnittdarstellung des Befestigungselementes 20 zu sehen. Das Verriegelungselement 56 ist in Pfeilrichtung verschoben worden, so dass die erste Spannfläche 58 die zweite Spannfläche 26 kontaktiert und überläuft, so dass ebenfalls eine Kraft F in Pfeilrichtung nach unten ausgeübt wird und somit ein Verspannen der Spritzvorrichtung 10 mit dem Schnellwechseladapter 50 erfolgt. In der Figur 10d befindet sich das Verriegelungselement 56 in der Verriegelungsposition.

### Bezugszeichenliste

- 1: Spritzsystem
- 2: Roboter
- 4: Roboterarm
- 5: Beschichtungsanlage
- 8: Gegenstand

- 10: Spritzvorrichtung
- 12: Gehäuse
- 13: Auflagefläche
- 14: Spritzkopf
- 15: Materialaustrittsdüse
- 15a: Materialnadel
- 16a-d: erste Luftdüse
- 17a, b: Materialanschluss
- 18a, b: Horn
- 19a, b: zweite Luftdüse

- 20: Befestigungselement
- 21: Spann- und Verriegelungsmittel
- 22: Aussparung
- 23: Bohrung
- 26: zweite Spannfläche

- 30: Materialbehälter
- 30a: gravitationsbetriebender Materialbehälter
- 31: Druckluftzuleitung
- 32: Spritzverlängerungseinrichtung
- 34: Materialversorgungseinrichtung

- 40: erstes Führungsmittel
- 42: verjüngter Abschnitt

- 50: Schnellwechseladapter
- 51: Haltebolzen
- 52: erste Montagefläche
- 54: zweite Montagefläche
- 55: Verriegelungseinrichtung
- 56: Verriegelungselement
- 57: vorderes Ende
- 58: erste Spannfläche
- 59: Langloch
- 59a: kreisrunder Lochabschnitt
- 59b: länglicher Lochabschnitt

- 60: erste Bohrung
- 61: zweite Bohrung
- 62: Kolbenkammer
- 64: Kolben

- 70a, b: Spritzluftkanal
- 71a, b: Spritzluftanschluss
- 72a, b: Steuerluftkanal
- 73: Steuerluftanschluss
- 74: Druckluftkanal für Behälter
- 75: Druckluftanschluss des Behälters
- 77a, b: Steuerluftanschluss für Verriegelungseinrichtung

- 80: Leitungssystem
- 82: Leitung für Material (Vorlaufleitung)
- 84: Leitung für Material (Rücklaufleitung)
- 85: Leitung für Druckluft
- 86: Nachführeinrichtung
- 87: Schiene
- 88: Leitungsspeicher
- 89: Rollensystem

- 100: Speicher- und Wechselvorrichtung
- 102: Grundkörper der Speicher- und Wechselvorrichtung
- 104: Magazin
- 105a: horizontale Schwenkachse des Magazins
- 105b: vertikale Schwenkachse des Magazins
- 106: Apparatefach
- 108: Aufnahmeeinrichtung

- 110: zweites Führungsmittel
- 112: Führungsschiene
- 112: Seitenwand
- 114: Rückwand

- 120: Verfahreinrichtung
- 122: Antriebseinrichtung
- 124: Winkelgetriebe
- 126: Schiene

- L_{B}: Längsachse des Befestigungselements
- L_{R}: Längsachse des Verriegelungselements

## Patentansprüche

1. Spritzsystem (1) mit
- mindestens zwei Spritzvorrichtungen (10) zum Auftragen von Spritzmaterialien auf zu beschichtende Gegenstände (5), wobei die Spritzvorrichtung (10)
- eine Auflagefläche (13) zur Montage an einem Schnellwechseladapter (100),
- ein Gehäuse (12) und einen Spritzkopf (14), wobei die Auflagefläche (13) an dem Gehäuse (12) vorgesehen ist, und
- mindestens ein gegenüber der Auflagefläche (13) vorstehendes Befestigungselement (20) mit einer Längsachse L_{B} aufweist, und
- wobei zweite Mittel zur automatischen, lösbaren Befestigung an einem Schnellwechseladapter (50) vorgesehen sind, wobei diese zweiten Mittel das Befestigungselement (20) umfassen, und
das Befestigungselement (20) mindestens ein Spann- und Verriegelungsmittel (21) aufweist, das derart ausgebildet ist, dass im montierten Zustand der Spritzvorrichtung (10) mindestens ein verschiebbares Verriegelungselement (56) des Schnellwechseladapters (50) durch Verschieben in Richtung seiner Längsachse eine von der Auflagefläche (13) weg gerichtete Kraft in Richtung der Längsachse L_{B} des Befestigungselements (20) auf das Befestigungselement (20) ausübt,
- den Spritzvorrichtungen (10) zugeordneten Schnellwechseladaptern (50), wobei jeder Schnellwechseladapter (50) eine erste Montagefläche (52) zur lösbaren Anordnung an einem Roboterarm (4) und eine zweite Montagefiäche (54) zur Anordnung einer Spritzvorrichtung (10) aufweist, wobei der Schnellwechseladapter (50) erste Mittel und die Spritzvorrichtung (10) zweite Mittel zur automatischen, lösbaren Befestigung der Spritzvorrichtung (10) am Schnellwechseladapter (50) aufweisen, wobei die ersten Mittel des Schnellwechseladapters (50) zur automatischen, lösbaren Befestigung eine pneumatisch, hydraulisch oder elektrisch betätigbare Verriegelungseinrichtung (55) umfassen und
- einer Speicher- und Wechselvorrichtung (100), die mindestens zwei Spritzvorrichtungen (10) aufnimmt.

2. Spritzsystem (1) nach Anspruch 1, **dadurch gekennzeichnet, dass** jede Spritzvorrichtung (10) zur Durchführung eines Arbeitsganges ausgelegt ist.

3. Spritzsystem (1) nach Anspruch 1 oder 2, **dadurch gekennzeichnet, dass** jeder Spritzvorrichtung (10) ein eigener Materialbehälter (30, 30a) zugeordnet ist.

4. Spritzsystem (1) nach Anspruch 3, **dadurch gekennzeichnet, dass** der Materialbehälter (30, 30a) an der Spritzvorrichtung (10) angeordnet ist.

5. Spritzsystem (1) nach Anspruch 3, **dadurch gekennzeichnet, dass** der Materialbehälter (30) Bestandteil einer Materialversorgungseinrichtung (34) ist, die über mindestens eine Leitung (82, 84) mit der Spritzvorrichtung (10) verbunden ist.

6. Spritzsystem (1) nach einem der Ansprüche 1 bis 5, **dadurch gekennzeichnet, dass** ein Leitungssystem (80) mit Zuleitungen (82, 84) für die Zuführung von Spritzmaterial und/oder von Druckluft vorgesehen ist.

7. Spritzsystem (1) nach einem der Ansprüche 1 bis 6, **dadurch gekennzeichnet, dass** das Leitungssystem (80) für jede einzelne Spritzvorrichtung (10) eine Materialzirkulatiansleitung aufweist.

8. Spritzsystem (1) nach Anspruch 6 oder 7, **dadurch gekennzeichnet, dass** die Leitungen (82, 84) des Leitungssystems (80) flexibel sind.

9. Spritzsystem (1) nach einem der Ansprüche 6 bis 8, **dadurch gekennzeichnet, dass** das Leitungssystem (80) eine Nachführeinrichtung (86) aufweist.

10. Spritzsystem (1) nach einem der Ansprüche 1 bis 9, **dadurch gekennzeichnet, dass** die Verriegelungseinrichtung (55) ein Verriegelungselement (56) aufweist.

11. Spritzsystem nach einem der Ansprüche 1 bis 10, **dadurch gekennzeichnet, dass** die zweiten Mittel der Spritzvorrichtung (10) zur automatischen lösbaren Befestigung ein Befestigungselement (20) umfassen.

12. Spritzsystem (1) nach Anspruch 11, **dadurch gekennzeichnet, dass** das Verriegelungselement (56) und das Befestigungselement (20) eine formschlüssige und/oder kraftschlüssige Verbindung bilden.

13. Spritzsystem nach Anspruch 1 bis 12, **dadurch gekennzeichnet, dass** das Gehäuse (12) mindestens ein erstes Führungsmittel aufweist.

14. Spritzsystem nach einem der Ansprüche 1 bis 13, **dadurch gekennzeichnet, dass** der Schnellwechseladapter (50)
- einen Adaptergrundkörper (58) und ein Verriegelungselement (56) aufweist,
- wobei der Adaptergrundkörper (58) eine erste Montagefläche (52) zur lösbaren Anordnung an einem Roboterarm (4) und eine zweite Montagefläche (54) zur lösbaren Anordnung einer Spritzvorrichtung (10) aufweist, wobei im Adaptergrundkörper (58) senkrecht zur zweiten Montagefläche (54) mindestens eine erste Bohrung (60) zur Aufnahme mindestens eines an der Spritzvorrichtung (10) angeordneten Befestigungselementes (20) vorgesehen ist, und
- wobei das Verriegelungselement (56) sich mindestens teilweise in die erste Bohrung (60) erstreckt und parallel zur Montagefläche angeordnet ist, und
- wobei erste Mittel zur automatischen, lösbaren Befestigung eines Spritzapparates (10) vorgesehen sind, die eine pneumatisch, hydraulisch oder elektrisch betätigbare Verriegelungseinrichtung (55) umfassen, welche das Verriegelungselement (56) von einer Freigabeposition in eine Verriegelungsposition und umgekehrt bewegt.

15. Spritzsystem (1) nach einem der Ansprüche 1 bis 14, **dadurch gekennzeichnet, dass** die Speicher- und Wechselvorrichtung (100) mindestens ein Magazin (104) mit mindestens zwei Apparatefächern (106) aufweist, wobei jedes Apparatefach (106) eine Aufnahmeeinrichtung (108) für eine Spritzvorrichtung (10) aufweist.

16. Spritzsystem (1) nach Anspruch 15, **dadurch gekennzeichnet, dass** die Apparatefächer (106) nebeneinander und/oder übereinander angeordnet sind.

17. Spritzsystem (1) nach Anspruch 15 oder 16, **dadurch gekennzeichnet, dass** ein Grundkörper (102) vorgesehen ist, an dem das Magazin (104) angeordnet ist.

18. Spritzsystem (1) nach Anspruch 17, **dadurch gekennzeichnet, dass** das Magazin (104) und/oder die Apparatefächer (106) um eine horizontale Achse (105a) und/oder vertikale Achse (105b) schwenkbar am Grundkörper (102) angeordnet sind.

19. Spritzsystem (1) nach Anspruch 17, **dadurch gekennzeichnet, dass** das Magazin (104) und/oder die Apparatefächer (106) in vertikaler Richtung und/oder in horizontaler Richtung verstellbar am Grundkörper (102) angeordnet sind.

20. Spritzsystem (1) nach Anspruch 17, **dadurch gekennzeichnet, dass** am Grundkörper (102) eine Verfahreinrichtung (120) angeordnet ist, an der das Magazin (104) angeordnet ist.

21. Spritzsystem (1) nach einem der Ansprüche 17 bis 20, **dadurch gekennzeichnet, dass** die Aufnahmeeinrichtung (108) des Apparatefachs (106) mindestens ein zweites Führungsmittel für die Spritzvorrichtung (10) aufweist.

22. Beschichtungsanlage mit einem Roboter (2) und einem Spritzsystem (1) gemäß Anspruch 1.

23. Verfahren zum Beschichten eines Gegenstandes mit Spritzmaterialien unter Verwendung eines Spritzsystems nach Anspruch 1, wobei mindestens zwei Arbeitsgänge zeitlich nacheinander durchgeführt werden und jeder Arbeitsgang folgende aufeinanderfolgende Verfahrensschritte aufweist:
a ein Roboter (2) mit einem Roboterarm (4), der mit einem Schnellwechseladapter (50) bestückt ist, fährt entsprechend seines vorprogrammierten Ablaufs eine in einer Speicher- und Wechselvorrichtung (100) vorgehaltene Spritzvorrichtung (10) an, die für den betreffenden Arbeitsgang ausgelegt ist,
b. ein Befestigungselement (20) der Spritzvorrichtung (10) wird mit einem beweglichen Verriegelungselement (56) des Schnellwechseladapters (50) automatisch in Eingriff gebracht, wodurch die Spritzvorrichtung (10) am Schnellwechseladapter (50) befestigt wird,
c. der Roboter (2) fährt die Spritzvorrichtung (10) zum zu beschichtenden Gegenstand,
d. der Gegenstand wird beschichtet,
e. die Spritzvorrichtung (10) wird nach der Beschichtung von dem Schnellwechseladapter (50) gelöst und wieder in der Speicher- und Wechselvorrichtung (100) abgelegt.

## Claims

1. Spraying system (1) comprising
- at least two spraying devices (10) for applying spraying material to items (5) to be coated, wherein the spraying device (10) has
- a bearing surface (13) for mounting on a quick change adapter (100),
- a housing (12) and a spray head (14), wherein the bearing surface (13) is provided on the housing (12), and
- at least one fastening element (20) that has a longitudinal axis L_{B} and protrudes relative to the bearing surface (13), and
- wherein second means are provided for automatic, detachable fastening to a quick change adapter (50), wherein said second means comprise the fastening element (20), and
the fastening element (20) has at least one clamping and locking means (21) which is designed such that, when the spraying device (10) is assembled, at least one movable locking element (56) of the quick change adapter (50) exerts, by movement in the direction of the longitudinal axis thereof, a force on the fastening element (20), which force is directed away from the bearing surface (13) in the direction of the longitudinal axis L_{B} of the fastening element (20),
- quick change adapters (50) associated with the spray devices (10), wherein each quick change adapter (50) has a first mounting surface (52) for detachable arrangement on a robotic arm (4) and a second mounting surface (54) for arranging a spraying device (10), wherein the quick change adapter (50) has first means and the spraying device (10) has second means for automatically detachably fastening the spraying device (10) to the quick change adapter (50), wherein the first means of the quick change adapter (50) for the automatic, detachable fastening comprise a locking apparatus (55) that can be pneumatically, hydraulically or electrically actuated and
- a storage and changeover device (100) which holds at least two spraying devices (10).

2. Spraying system (1) according to claim 1, **characterised in that** each spraying device (10) is designed to carry out an operation.

3. Spraying system (1) according to either claim 1 or claim 2, **characterised in that** each spraying device (10) is allocated its own material container (30, 30a).

4. Spraying system (1) according to claim 3, **characterised in that** the material container (30, 30a) is arranged on the spraying device (10).

5. Spraying system (1) according to claim 3, **characterised in that** the material container (30) is a component of a material supply apparatus (34) that is connected to the spraying device (10) via at least one duct (82, 84).

6. Spraying system (1) according to any one of claims 1 to 5, **characterised in that** a duct system (80) comprising supply ducts (82, 84) is provided for supplying spraying material and/or compressed air.

7. Spraying system (1) according to any one of claims 1 to 6, **characterised in that** the duct system (80) has a material circulation duct for each individual spraying device (10).

8. Spraying system (1) according to either claim 6 or claim 7, **characterised in that** the ducts (82, 84) of the duct system (80) are flexible.

9. Spraying system (1) according to any one of claims 6 to 8, **characterised in that** the duct system (80) has a repositioning apparatus (86).

10. Spraying system (1) according to any one of claims 1 to 9, **characterised in that** the locking apparatus (55) has a locking element (56).

11. Spaying system according to any one of claims 1 to 10, **characterised in that** the second means of the spraying device (10) comprises a fastening element (20) for automatic, detachable fastening.

12. Spraying system (1) according to claim 11, **characterised in that** the locking element (56) and the fastening element (20) produce a form-fitting and/or frictional connection.

13. Spraying system according to claims 1 to 12, **characterised in that** the housing (12) has at least one first guide means.

14. Spraying system according to any one of claims 1 to 13, **characterised in that** the quick change adapter (50)
- comprises an adapter main body (58) and a locking element (56),
- the adapter main body (58) having a first mounting surface (52) for detachable arrangement on a robotic arm (4) and a second mounting surface (54) for detachably arranging a spraying device (10), at least one first bore (60) for holding at least one fastening element (20) arranged on the spraying device (10) being provided in the adapter main body (58), perpendicularly to the second mounting surface (54), and
- the locking element (56) extending into the first bore (60), at least in part, and being arranged in parallel with the mounting surface, and
- first means for automatically detachably fastening a spraying appliance (10) being provided which comprise a locking apparatus (55) that can be pneumatically, hydraulically or electrically actuated and moves the locking element (56) from a released position into a locking position and vice versa.

15. Spraying system (1) according to any one of claims 1 to 14, **characterised in that** the storage and changeover device (100) has at least one magazine (104) comprising at least two appliance compartments (106), each appliance compartment (106) having a holding apparatus (108) for a spraying device (10).

16. Spraying system (1) according to claim 15, **characterised in that** the appliance compartments (106) are arranged beside and/or on top of one another.

17. Spraying system (1) according to either claim 15 or claim 16, **characterised in that** a main body (102) is provided on which the magazine (104) is arranged.

18. Spraying system (1) according to claim 17, **characterised in that** the magazine (104) and/or the appliance compartments (106) are arranged on the main body (102) so as to be pivotable about a horizontal axis (105a) and/or a vertical axis (105b).

19. Spraying system (1) according to claim 17, **characterised in that** the magazine (104) and/or the appliance compartments (106) are arranged on the main body (102) so as to be adjustable in the vertical direction and/or in the horizontal direction.

20. Spraying system (1) according to claim 17, **characterised in that** a movement apparatus (120) is arranged on the main body (102), on which apparatus the magazine (104) is arranged.

21. Spraying system (1) according to any one of claims 17 to 20, **characterised in that** the holding apparatus (108) of the appliance compartment (106) has at least one second guide means for the spraying device (10).

22. Coating installation comprising a robot (2) and a spraying system (1) according to claim (1).

23. Method for coating an item with spraying material using a spraying system according to claim 1, wherein at two least operations are carried out in succession and each operation has the following successive method steps:
a. a robot (2) comprising a robotic arm (4) that is provided with a quick change adapter (50) starts up, according to a pre-programmed sequence thereof, a spraying device (10) that is held in a storage and changeover device (100) and is designed for the operation concerned,
b. a fastening element (20) of the spraying device (10) automatically engages with a movable locking element (56) of the quick change adapter (50), as a result of which the spraying device (10) is fastened to the quick change adapter (50),
c. the robot (2) moves the spraying device (10) towards the item to be coated,
d. the item is coated,
d. the spraying device (10) is detached from the quick changed adapter (50) after the coating process and is put back into the storage and changeover device (100).

## Revendications

1. Système de pulvérisation (1) comportant
- au moins deux dispositifs de pulvérisation (10) pour l'application de matières pulvérisables sur des objets (5) à revêtir, dans lequel le dispositif de pulvérisation (10) présente
- une surface d'appui (13) permettant un montage sur un adaptateur pour changement rapide (100),
- un boîtier (12) et une tête de pulvérisation (14), dans lequel la surface d'appui (13) est prévue sur le boîtier (12), et
- au moins un élément de fixation (20) en saillie de la surface d'appui (13) avec un axe longitudinal L_{B}, et
- dans lequel sont prévus des deuxièmes moyens pour la fixation automatique amovible sur un adaptateur pour changement rapide (50), dans lequel les deuxièmes moyens comprennent l'élément de fixation (20), et
l'élément de fixation (20) présente au moins un moyen de serrage et de verrouillage (21) réalisé de telle manière qu'en état de montage du dispositif de pulvérisation (10) au moins un élément de verrouillage (56) mobile de l'adaptateur pour changement rapide (50) exerce sur l'élément de fixation (20) une force orientée à l'opposé de la surface d'appui (13) dans la direction de l'axe longitudinal L_{B} de l'élément de fixation (20), par déplacement dans la direction de son axe longitudinal,
- des adaptateurs pour changement rapide (50) associés aux dispositifs de pulvérisation (10), dans lequel chaque adaptateur pour changement rapide (50) présente une première surface de montage (52) permettant une mise en place amovible sur un bras de robot (4) et une deuxième surface de montage (54) permettant la mise en place d'un dispositif de pulvérisation (10), dans lequel l'adaptateur pour changement rapide (50) comporte des premiers moyens et le dispositif de pulvérisation (10) des deuxièmes moyens pour la fixation automatique amovible du dispositif de pulvérisation (10) sur l'adaptateur pour changement rapide (50), dans lequel les premiers moyens de l'adaptateur pour changement rapides (50) qui permettent la fixation automatique amovible comprend un dispositif de verrouillage (55) actionnable pneumatiquement, hydrauliquement ou électriquement, et
- un dispositif de réception et de changement (100) reçoit au moins deux dispositifs de pulvérisation (10).

2. Système de pulvérisation (1) selon la revendication 1, **caractérisé en ce que** chaque dispositif de pulvérisation (10) est prévu pour exécuter une phase de travail.

3. Système de pulvérisation (1) selon la revendication 1 ou 2, **caractérisé en ce qu'**à chaque dispositif de pulvérisation (10) est associé un récipient de matière (30, 30a) propre.

4. Système de pulvérisation (1) selon la revendication 3, **caractérisé en ce que** le récipient de matière (30, 30a) est disposé sur le dispositif de pulvérisation (10).

5. Système de pulvérisation (1) selon la revendication 3, **caractérisé en ce que** le récipient de matière (30) fait partie d'un dispositif d'alimentation en matière (34) qui est relié au dispositif de pulvérisation (10) par au moins une conduite (82, 84).

6. Système de pulvérisation (1) selon l'une des revendications 1 à 5, **caractérisé en ce qu'**un système de conduites (80) avec des conduites d'amenée (82, 84) est prévu pour l'amenée de matière pulvérisable et/ou d'air comprimé.

7. Système de pulvérisation (1) selon l'une des revendications 1 à 6, **caractérisé en ce que** le système de conduites (80) comprend une conduite de circulation de matière pour chaque dispositif de pulvérisation (10) individuel.

8. Système de pulvérisation (1) selon la revendication 6 ou 7, **caractérisé en ce que** les conduites (82, 84) du système de conduites (80) sont flexibles.

9. Système de pulvérisation (1) selon l'une des revendications 6 à 8, **caractérisé en ce que** le système de conduites (80) comprend un dispositif de poursuite (86).

10. Système de pulvérisation (1) selon l'une des revendications 1 à 9, **caractérisé en ce que** le dispositif de verrouillage (55) comprend un élément de verrouillage (56).

11. Système de pulvérisation selon l'une des revendications 1 à 10, **caractérisé en ce que** les deuxièmes moyens du dispositif de pulvérisation (10) pour la fixation automatique amovible comprennent un élément de fixation (20).

12. Système de pulvérisation (1) selon la revendication 11, **caractérisé en ce que** l'élément de verrouillage (56) et l'élément de fixation (20) forment un raccord à engagement positif et/ou à serrage.

13. Système de pulvérisation selon l'une des revendications 1 à 12, **caractérisé en ce que** le boîtier (12) comprend au moins un premier moyen de guidage.

14. Système de pulvérisation selon l'une des revendications 1 à 13, **caractérisé en ce que** l'adaptateur pour changement rapide (50)
- comprend un corps de base (58) d'adaptateur et un élément de verrouillage (56),
- dans lequel le corps de base (58) d'adaptateur présente une première surface de montage (52) permettant la mise en place amovible sur un bras de robot (4) et une deuxième surface de montage (54) permettant la mise en place amovible d'un dispositif de pulvérisation (10), dans lequel au moins un premier alésage (60) pour la réception d'au moins un élément de fixation (20) disposé sur le dispositif de pulvérisation (10) est prévu dans le corps de base (58) d'adaptateur perpendiculairement aux deuxièmes surface de montage (54), et
- dans lequel l'élément de verrouillage (56) s'étend au moins en partie dans le premier alésage (60) et est disposé parallèlement à la surface de montage, et
- dans lequel des premiers moyens pour la fixation automatique amovible d'un appareil de pulvérisation (10) sont prévus, lesquels comprennent un dispositif de verrouillage (55) actionnable pneumatiquement, hydrauliquement ou électriquement et qui déplace l'élément de verrouillage (56) d'une position de libération vers une position de verrouillage et inversement.

15. Système de pulvérisation (1) selon l'une des revendications 1 à 14, **caractérisé en ce que** le dispositif de réception et de changement (100) comprend au moins un magasin (104) avec au moins deux casiers d'appareil (106), dans lequel chaque casier d'appareil (106) comporte un dispositif de réception (108) pour un dispositif de pulvérisation (10).

16. Système de pulvérisation (1) selon la revendication 15, **caractérisé en ce que** les casiers d'appareil (106) sont disposés côte à côte et/ou l'un au-dessus de l'autre.

17. Système de pulvérisation (1) selon la revendication 15 ou 16, **caractérisé en ce qu'**un corps de base (102) est prévu, contre lequel est disposé le magasin (104).

18. Système de pulvérisation (1) selon la revendication 17, **caractérisé en ce que** le magasin (104) et/ou les casiers d'appareil (106) sont pivotants contre le corps de base (102) autour d'un axe horizontal (105a) et/ou d'un axe vertical (105b).

19. Système de pulvérisation (1) selon la revendication 17, **caractérisé en ce que** le magasin (104) et/ou les casiers d'appareil (106) sont déplaçables contre le corps de base (102) dans la direction verticale et/ou dans la direction horizontale.

20. Système de pulvérisation (1) selon la revendication 17, **caractérisé en ce qu'**un dispositif de déplacement (120) contre lequel est disposé le magasin (104) est disposé contre le corps de base (102).

21. Système de pulvérisation (1) selon l'une des revendications 17 à 20, **caractérisé en ce que** le dispositif de réception (108) du casier d'appareil (106) comporte au moins un deuxième moyen de guidage pour le dispositif de pulvérisation (10).

22. Installation de revêtement comprenant un robot (2) et un système de pulvérisation (1) selon la revendication 1.

23. Procédé de revêtement d'un objet avec des matières pulvérisables recourant à un système de pulvérisation selon la revendication 1, dans lequel au moins deux phases de travail sont exécutées successivement et dans lequel chaque phase de travail comprend les étapes de procédé successives suivantes :
a. un robot (2) comportant un bras de robot (4) équipé d'un adaptateur pour changement rapide (50) déplace conformément à sa procédure préprogrammée un dispositif de pulvérisation (10) maintenu dans un dispositif de réception et de changement (100) et conçu pour la phase de travail en question,
b. un élément de fixation (20) du dispositif de pulvérisation (10) est automatiquement mis en prise avec un élément de verrouillage (56) mobile de l'adaptateur pour changement rapide (50), ce qui fixe le dispositif de pulvérisation (10) sur l'adaptateur pour changement rapide (50),
c. le robot (2) déplace le dispositif de pulvérisation (10) vers l'objet à revêtir,
d. l'objet est revêtu,
e. le dispositif de pulvérisation (10) est après revêtement retiré de l'adaptateur pour changement rapide (50) et remis en place dans le dispositif de réception et de changement (100).
